# DEMANDE DE BREVET EUROPEEN

(11) **EP 3 683 898 A1**
(43) Date de publication de la demande: **22.07.2020**
(21) Numéro de dépôt: 20163106.6
(22) Date de dépôt: 16.09.2014
(51) Int. Cl.: H01R 13/625, H02S 40/36, H01R 13/71, H01H 19/36

(54) **ENSEMBLE OU SYSTÈME À CONNECTIQUE AMÉLIORÉE**

(30) Priorité: 23.09.2013 FR 1359099
(62) Demande divisionnaire de: 14766480.9
(71) Demandeur: Commissariat à l'Energie Atomique et aux Energies Alternatives, 75015 Paris (FR)
(72) Inventeur: PILAT, Eric, 73100 BRISON-SAINT-INNOCENT (FR); CHAINTREUIL, Nicolas, 73800 MONTMELIAN (FR); GINET, Cyril, 38110 SAINT VICTOR DE CESSIEU (FR)
(74) Mandataire: Novaimo

(57) **Abrégé**

Ensemble ou système photovoltaïque, comprenant :
- un connecteur électrique d'un premier type (12), et
- un connecteur électrique d'un deuxième type (13),
le connecteur électrique de premier type (12) étant agencé de sorte à pouvoir coopérer avec le connecteur électrique de deuxième type (13) pour établir une connexion électrique, le connecteur électrique de premier type (12) comprenant un élément rotatif (121) dont la rotation réalise le passage du connecteur électrique du premier type (12) d'une configuration active dans laquelle le connecteur électrique de premier type (12) permet l'établissement d'un lien électrique et une configuration inactive dans laquelle la possibilité d'établissement du lien électrique est inhibée, caractérisé en ce que l'élément rotatif (121) est constitué par une partie mobile (121) du connecteur électrique du premier type (12) montée à pivotement de sorte que le passage du connecteur électrique de premier type (12) d'une configuration à l'autre se pratique par un mouvement de pivotement (F1) de sa partie mobile (121) sur une course angulaire donnée, la configuration active correspondant à une première position angulaire de la partie mobile (121) dans laquelle une connexion électrique est établie et la configuration inactive correspondant à une deuxième position angulaire de la partie mobile (121) dans laquelle ladite connexion électrique n'est pas établie.

## Description

### Domaine technique de l'invention

L'invention concerne un ensemble ou système de connexion. Un module photovoltaïque comprenant un tel ensemble ou un tel système.

### État de la technique

Dans ce qui suit, le terme « module photovoltaïque » correspond préférentiellement à un capteur solaire de type panneau photovoltaïque ayant une pluralité de cellules photovoltaïques assemblées mécaniquement et connectées électriquement entre elles pour former un ensemble unitaire, généralement de forme plane.

En fonction de la puissance électrique recherchée, il est connu de connecter une pluralité de modules photovoltaïques entre eux en série et/ou en parallèle par l'intermédiaire de câbles électriques équipés de connecteurs électriques standards. Il existe de nombreux types de connecteurs standards. La connexion par câble permet d'établir une connexion électrique entre les modules photovoltaïques. Elle permet de par sa flexibilité une bonne compensation de défauts d'alignement entre les modules et d'éventuelles dilatations différentielles susceptibles d'apparaître entre les modules assemblés durant l'utilisation, par exemple durant une implantation sur une toiture.

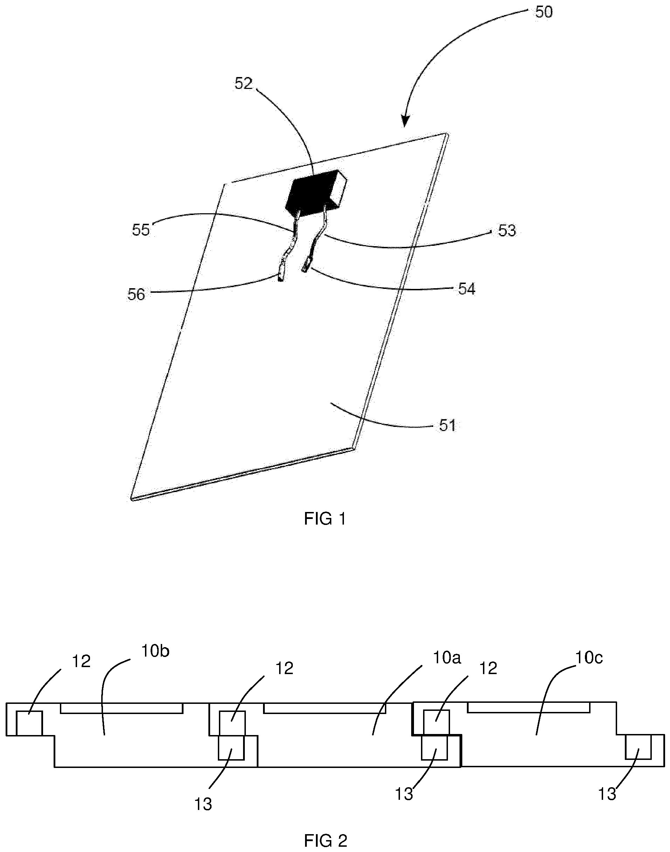

Un module photovoltaïque 50 connu de l'art antérieur est décrit ci-après en référence à la figure 1. Le module photovoltaïque 50 comprend des cellules photovoltaïques 51, un boîtier de connexion 52 duquel sortent des câbles de connexion 53, 55 aux extrémités desquels se trouvent des connecteurs 54, 56 mâle et femelle. Les câbles 53, 55 sont connectés à des bornes positive et négative du module 50 à l'intérieur du boîtier 52, lequel assure une protection de ces connexions et des bornes.

Avec de tels modules 50, il est possible de réaliser une installation photovoltaïque comprenant une pluralité de tels modules 50 montés électriquement en série et/ou en parallèle en étant reliés les uns aux autres via les câbles de connexion 53 et 55 et via les connecteurs 54 et 56.

Cette solution ne donne toutefois pas une entière satisfaction en raison des risques majeurs rencontrés en pratique, listés ci-dessous :
- risque de coupure totale ou partielle des câbles lors du transport ou de la mise en place de l'installation photovoltaïque,
- risque d'électrisation ou d'électrocution lors de la mise sous tension ou de la maintenance,
- risque d'apparition dangereuse d'un arc électrique, voire susceptible d'incendie,
- problèmes de dysfonctionnement et de perte de puissance,
- les connecteurs étant reliés directement au module photovoltaïque via les câbles 53, 55 et le boîtier de connexion 52, il y a un risque très élevé d'électrisation dans le cas où l'utilisateur plonge involontairement n'importe quel type de pièce électriquement conductrice dans les connecteurs, telle qu'un clou ou un tournevis.

Par ailleurs, cette solution de l'art antérieur présente les problèmes principaux suivants :
- problème de pénétration d'humidité au niveau de la fixation du couvercle du boîtier de connexion 52 au reste du boîtier, au niveau de la liaison entre chaque câble 53, 55 et les bornes électriques logées dans le boîtier 52, au niveau de la fixation de ces bornes au module photovoltaïque 50 et au niveau de la liaison électrique entre le module photovoltaïque 50 et la connexion électrique reliant les bornes et le module 50 ; il en résulte des problèmes d'accélération des processus de dégradation et les phénomènes de corrosion et d'hydrolyse engendrés par cette pénétration d'humidité sont les causes majeures relevées de dégradation des modules photovoltaïques,
- problème de perte de temps au moment de l'installation, pour connecter et ranger les câbles 53, 55,
- problème de perte de performance liée à une dissipation d'énergie dans les câbles 53, 55,
- problème d'une trop grande nécessité d'intervention humaine, ajoutant un risque d'erreur ou de mauvais raccordement, susceptible de mettre en péril l'installation,
- problème de sertissage des connecteurs 54, 56 sur les câbles 53, 55 souvent réalisé par l'installateur, induisant des risques pour lui et l'installation dans le cas où le raccordement est réalisé de façon inappropriée.

Le document WO2012/077393A1 décrit une solution ne répondant que partiellement à ces problèmes, à savoir une installation à plusieurs modules photovoltaïques assemblés entre eux en plusieurs rangées parallèles et connectés électriquement en série entre eux. Sur sa face inférieure, chaque module comprend un boitier dans lequel plusieurs connexions électriques sont réalisées. Les cellules d'un module sont en permanence connectées électriquement à un premier connecteur tandis que les cellules du module adjacent sont en permanence connectées électriquement à un deuxième connecteur. Les premier et deuxième connecteurs peuvent s'emmancher l'un dans l'autre pour connecteur les deux modules. Le premier connecteur comprend une pointe d'insert formant contact électrique, logée dans un boitier qui comprend sur sa surface extérieure un pion radial. Le deuxième connecteur comprend un manchon d'insert formant contact électrique de forme complémentaire de la pointe d'insert et une gorge comprenant une partie droite et une partie hélicoïdale. Le pion glisse dans la gorge. En insérant de manière rectiligne le premier connecteur dans le deuxième connecteur dans un état où le pion est au bout de la partie droite de la gorge, l'ensemble adopte une première configuration où les deux contacts sont protégés de l'extérieur mais ne sont pas en contact électrique entre eux. Puis, il est nécessaire de tourner le boitier du premier connecteur par rapport au boitier du deuxième connecteur, selon un guidage hélicoïdal imposé par le glissement du pion dans la parie hélicoïdale de la gorge, pour amener l'ensemble dans une deuxième configuration où les deux contacts sont protégés de l'extérieur et sont en contact électrique entre eux. Le premier connecteur électrique est toujours en connexion électrique avec le module sur lequel il est monté, quelle que soit la position angulaire adoptée par son boitier. De même, le deuxième connecteur est toujours en connexion électrique avec le module sur lequel il est monté.

### Objet de l'invention

Le but de l'invention est de fournir un ensemble ou système photovoltaïque permettant de remédier aux problèmes évoqués précédemment et améliorant les solutions connues de l'art antérieur.

En particulier, l'invention vise à proposer un ensemble ou système photovoltaïque permettant :
- une simplification du travail de l'installateur et une diminution du temps d'installation,
- une amélioration (fiabilisation, diminution de la quantité d'énergie dissipée, etc...) de la connectique électrique entre deux objets, notamment deux modules photovoltaïques, reliés entre eux,
- une suppression des risques liés à la coupure des câbles,
- une suppression totale des risques d'électrisation lors de la maintenance,
- une diminution du nombre d'étapes durant l'assemblage des objets, notamment des modules photovoltaïques,
- une minimisation du risque de pénétration d'humidité dans l'objet, notamment dans le module photovoltaïque.

Ces buts peuvent être atteints par un module photovoltaïque comprenant un connecteur électrique d'un premier type agencé de sorte à pouvoir coopérer avec un connecteur électrique d'un deuxième type d'un premier module photovoltaïque adjacent pour établir une connexion électrique entre ces deux modules photovoltaïque, le module comprenant un élément rotatif dont la rotation réalise le passage du connecteur électrique du premier type d'une configuration active dans laquelle le connecteur électrique de premier type permet l'établissement d'un lien électrique entre les modules photovoltaïques et une configuration inactive dans laquelle la possibilité d'établissement du lien électrique est inhibée, dans lequel l'élément rotatif est constitué par une partie mobile du connecteur électrique du premier type montée à pivotement de sorte que le passage du connecteur électrique de premier type d'une configuration à l'autre se pratique par un mouvement de pivotement de sa partie mobile sur une course angulaire donnée, la configuration active correspondant à une première position angulaire de la partie mobile dans laquelle une connexion électrique est établie entre le module photovoltaïque et le connecteur électrique de premier type et la configuration inactive correspondant à une deuxième position angulaire de la partie mobile dans laquelle ladite connexion électrique n'est pas établie.

Ainsi, selon un premier aspect de l'invention, des objets de l'invention sont définis par les propositions suivantes :
1. Module photovoltaïque 10a comprenant un connecteur électrique d'un premier type 12 agencé de sorte à pouvoir coopérer avec un connecteur électrique d'un deuxième type 13 d'un premier module photovoltaïque 10b adjacent pour établir une connexion électrique entre les modules photovoltaïque 10a, 10b, comprenant un élément rotatif 121 dont la rotation réalise le passage du connecteur électrique du premier type 12 d'une configuration active dans laquelle le connecteur électrique de premier type 12 permet l'établissement d'un lien électrique entre les modules photovoltaïques 10a, 10b et une configuration inactive dans laquelle la possibilité d'établissement du lien électrique est inhibée, caractérisé en ce que l'élément rotatif 121 est constitué par une partie mobile 121 du connecteur électrique du premier type 12 montée à pivotement de sorte que le passage du connecteur électrique de premier type 12 d'une configuration à l'autre se pratique par un mouvement de pivotement F1 de sa partie mobile 121 sur une course angulaire donnée, la configuration active correspondant à une première position angulaire de la partie mobile 121 dans laquelle une connexion électrique est établie entre le module photovoltaïque 10a et le connecteur électrique de premier type 12 et la configuration inactive correspondant à une deuxième position angulaire de la partie mobile 121 dans laquelle ladite connexion électrique n'est pas établie.
2. Module 10a selon la proposition 1, caractérisé en ce qu'il comprend un premier élément électriquement conducteur 14, agencé de sorte à établir la connexion électrique entre le module photovoltaïque 10a et la partie mobile 121 du connecteur électrique de premier type 12 dans la première position de la partie mobile du connecteur électrique de premier type 12.
3. Module 10a selon l'une des propositions 1 ou 2, caractérisé en ce que le connecteur électrique du premier type 12 comprend une partie fixe 122 montée au reste du module photovoltaïque 10a de sorte à être immobile en rotation autour de l'axe de pivotement D1 de la partie mobile 121 du connecteur électrique du premier type 12, en ce que le module 10a comprend un premier moyen d'étanchéité 123 à l'air et à l'eau interposé entre la partie mobile 121 et la partie fixe 122 du connecteur électrique de premier type 12 et un deuxième moyen d'étanchéité 124 à l'air et à l'eau interposé entre la partie fixe 122 du connecteur électrique de premier type 12 et le reste du module photovoltaïque 10a.
4. Module 10a selon l'une des propositions 1 à 3, caractérisé en ce que l'axe de pivotement D1 de la partie mobile 121 du connecteur électrique du premier type 12 est perpendiculaire aux directions X, Y correspondant à la longueur et à la largeur du module photovoltaïque 10a.
5. Module 10a selon l'une des propositions 1 à 4, caractérisé en ce qu'il comprend un connecteur électrique du deuxième type 13 agencé de sorte à pouvoir coopérer avec le connecteur électrique du premier type 12 d'un deuxième module photovoltaïque 10c adjacent et établir un lien électrique avec le deuxième module photovoltaïque 10c
6. Module 10a selon la proposition 5, caractérisé en ce que le connecteur électrique de deuxième type 13 comprend une partie mobile 131 par pivotement montée à pivotement par rapport au module photovoltaïque 10a sur une course angulaire donnée de sorte que le connecteur électrique de deuxième type 13 varie, par pivotement de ladite partie mobile 131, entre :
   - une configuration active adoptée dans une première position angulaire de ladite partie mobile 131 dans laquelle le connecteur électrique de deuxième type 13 permet l'établissement d'un lien électrique entre les modules photovoltaïques 10a, 10c et dans laquelle une connexion électrique est établie entre le module photovoltaïque 10a et le connecteur électrique de deuxième type 13,
   - et une configuration inactive adoptée dans une deuxième position angulaire de la partie mobile 131 dans laquelle la possibilité d'établissement du lien électrique entre les modules photovoltaïques 10a, 10c est inhibée et dans laquelle la connexion électrique entre le module photovoltaïque 10a et le connecteur électrique de deuxième type 13 n'est pas établie.
7. Module 10a selon l'une des propositions 5 ou 6, caractérisé en ce qu'il comprend un deuxième élément électriquement conducteur 15, notamment sous la forme d'une deuxième lame électriquement conductrice, agencé de sorte à établir la connexion électrique entre le module photovoltaïque 10a et la partie mobile 131 du connecteur électrique de deuxième type 13 dans la première position de la partie mobile 131 du connecteur électrique de deuxième type 13.
8. Module 10a selon l'une des propositions 5 à 7, caractérisé en ce que le connecteur électrique du deuxième type 13 comprend une partie fixe 132 montée au reste du module photovoltaïque 10a de sorte à être immobile en rotation autour de l'axe de pivotement D2 de la partie mobile 131 du connecteur électrique du deuxième type 13, en ce que le module 10a comprend un troisième moyen d'étanchéité 133 à l'air et à l'eau interposé entre la partie mobile 131 et la partie fixe 132 du connecteur électrique de deuxième type 13 et un quatrième moyen d'étanchéité 134 à l'air et à l'eau interposé entre la partie fixe 132 du connecteur électrique de deuxième type 13 et le reste du module photovoltaïque 10a.
9. Module 10a selon l'une des propositions 5 à 8, caractérisé en ce que l'axe de pivotement D2 de la partie mobile 131 du connecteur électrique du deuxième type 13 est perpendiculaire aux directions X, Y correspondant à la longueur et à la largeur du module photovoltaïque 10a.
10. Module 10a selon l'une des propositions 1 à 9, caractérisé en ce que le connecteur électrique du premier type 12 et/ou le connecteur électrique du deuxième type 13 est agencé au niveau d'un cadre 16 ceinturant le module photovoltaïque 10a.
11. Module 10a selon la proposition 10, caractérisé en ce que le cadre comprend un logement 17, 18, notamment de forme circulaire, dans lequel est logé le connecteur électrique du premier type 12 et/ou le connecteur électrique du deuxième type 13.
12. Installation photovoltaïque, caractérisée en ce qu'elle comprend le module photovoltaïque 10a et le premier module photovoltaïque adjacent 10b chacun selon l'une quelconque des propositions 1 à 11 et disposés de manière adjacente l'un contre l'autre, le module 10a comprenant un connecteur électrique de premier type 12 et le premier module adjacent 10b comprenant un connecteur électrique de deuxième type 13, l'installation variant entre une première configuration électrique dans laquelle un lien électrique est établi entre les modules photovoltaïques 10a, 10b adoptée dans la configuration active du connecteur électrique de premier type 12 et lorsque le connecteur électrique du premier type 12 et le connecteur électrique du deuxième type 13 sont en contact physique et électrique, et une deuxième configuration électrique dans laquelle le lien électrique n'est pas établi entre les modules photovoltaïques 10a, 10b adoptée dans la configuration inactive du connecteur électrique de premier type 12 et/ou lorsque le connecteur électrique du premier type 12 et le connecteur électrique du deuxième type 13 ne sont pas en contact physique et électrique.
13. Installation selon la proposition 12, caractérisée en ce que dans la première configuration électrique de l'installation, la partie mobile 121 du connecteur électrique de premier type 12 occupe la première position angulaire où une connexion électrique est établie entre le module photovoltaïque 10a et le connecteur électrique de premier type 12, la partie mobile 131 du connecteur électrique de deuxième type 13 occupe la première position angulaire où une connexion électrique est établie entre le premier module photovoltaïque 10b et le connecteur électrique de deuxième type 13 et les parties mobiles 121, 131 des connecteurs électriques de premier et deuxième types 12, 13 sont en contact physique et électrique, et en ce que dans la deuxième configuration électrique de l'installation, la partie mobile 121 du connecteur électrique de premier type 12 occupe la deuxième position angulaire où la connexion électrique n'est pas établie entre le module photovoltaïque 10a et le connecteur électrique de premier type 12 et/ou la partie mobile 131 du connecteur électrique de deuxième type 13 occupe la deuxième position angulaire où la connexion électrique n'est pas établie entre le premier module photovoltaïque adjacent 10b et le connecteur électrique de deuxième type 13 et/ou les parties mobiles 121, 131 des connecteurs électriques de premier et deuxième types 12, 13 ne sont pas en contact physique et électrique.
14. Installation selon l'une des propositions 12 ou 13, caractérisée en ce que le module photovoltaïque 10a et le premier module photovoltaïque adjacent 10b comprennent respectivement des premier et deuxième éléments d'assemblage indépendants des connecteurs électriques de premier et de deuxième types 12 13 et coopérant l'un avec l'autre de sorte à solidariser ou désolidariser mécaniquement les modules photovoltaïques 10a, 10b entre eux selon un positionnement relatif tel que l'axe de pivotement D1 de la partie mobile 121 du connecteur électrique de premier type 12 soit aligné avec l'axe de pivotement D2 de la partie mobile 131 du connecteur électrique du deuxième type 13.
15. Installation selon la proposition 14, caractérisée en ce que les connecteurs électriques de premier et de deuxième types 12, 13 sont agencés de sorte que la mise en œuvre d'une désolidarisation mécanique entre les modules photovoltaïques 10a, 10b par les premier et deuxième éléments d'assemblage provoque automatiquement le passage de l'installation vers la deuxième configuration électrique, notamment par la suppression de tout contact physique et électrique entre les parties mobiles 121, 131 des connecteurs électriques de premier et deuxième types 12, 13.
16. Installation selon l'une des propositions 14 ou 15, caractérisée en ce que les premier et deuxième éléments d'assemblage peuvent solidariser mécaniquement les modules photovoltaïque 10a, 10b entre eux indépendamment du choix parmi les première et deuxième configurations électriques de l'installation.
17. Installation selon l'une des propositions 12 à 16, caractérisée en ce que le connecteur électrique de premier type 12 comprend un organe d'actionnement 125 accessible depuis l'extérieur du module photovoltaïque 10a et agencé de sorte à permettre l'application audit organe d'actionnement 125 d'un effort d'entraînement provoquant un mouvement de pivotement F1 de la partie mobile 121 du connecteur électrique de premier type 12 de la deuxième position à la première position et en ce que les connecteurs électriques de premier et de deuxième types 12, 13 comprennent des éléments de coopération 126, 136, notamment de formes complémentaires de type mâle-femelle, assurant que ledit mouvement de pivotement F1 de la partie mobile 121 du connecteur électrique de premier type 12 provoque un mouvement de pivotement F3 de la partie mobile 131 du connecteur électrique de deuxième type 13 de sa deuxième position à sa première position, la partie mobile 131 du connecteur électrique de deuxième type 13 étant entraînée par la partie mobile 121 du connecteur électrique de premier type 12 au niveau desdits éléments de coopération 126, 136.
18. Installation selon la proposition 17, caractérisée en ce que la partie mobile 121 du connecteur électrique de premier type 12 est montée à coulissement le long de son axe de pivotement D1 de sorte à pouvoir se translater sur une course de coulissement en opposition à l'action d'un premier élément de rappel 21 du module 10a sollicitant ladite partie mobile 121 vers une position de repos et en ce que le connecteur électrique de premier type 12 est agencé de telle sorte que l'entraînement à pivotement F1 de la partie mobile 121 du connecteur électrique de premier type 12 par l'organe d'actionnement 125 est conditionné à la mise en œuvre d'un mouvement de coulissement F2 de la partie mobile 121 du connecteur électrique de premier type 12 depuis sa position de repos.
19. Installation selon la proposition 18, caractérisée en ce que la partie mobile 131 du connecteur électrique de deuxième type 13 est montée à coulissement le long de son axe de pivotement D2 de sorte à pouvoir se translater sur une course de coulissement en opposition à l'action d'un deuxième élément de rappel 22 du premier module adjacent 10b sollicitant ladite partie mobile 131 vers une position de repos et en ce que les connecteurs électriques de premier et de deuxième types 12, 13 assurent que le mouvement de coulissement F2 de la partie mobile 121 du connecteur électrique de premier type 12 depuis sa position de repos provoque un mouvement de coulissement F4 de la partie mobile 131 du connecteur électrique de deuxième type 13 depuis sa position de repos, l'entraînement à pivotement F3 de la partie mobile 131 du connecteur électrique de deuxième type 13 par la partie mobile 121 du connecteur électrique de premier type 12 étant conditionné à la mise en œuvre du mouvement de coulissement F4 de la partie mobile 131 du connecteur électrique de deuxième type 13 depuis sa position de repos.

Selon un deuxième aspect de l'invention, un ensemble ou système est défini par la revendication 1.

Un mode de réalisation de l'ensemble ou système est défini par la revendication 2.

Selon ce deuxième aspect de l'invention, un module photovoltaïque est défini par la revendication 3.

Différents modes de réalisation du module sont définis par les revendications 4 à 14.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre en perspective un module photovoltaïque selon l'art antérieur,
- la figure 2 est une coupe schématique d'une installation photovoltaïque à trois modules photovoltaïques selon l'invention assemblés entre eux,
- les figures 3 et 4 représentent le principe de fonctionnement des connecteurs électriques, au niveau d'une coupe schématique de la zone de jonction entre deux modules adjacents, respectivement dans leurs configurations inactives et dans leurs configurations actives,
- les figures 5 et 6 représentent en perspective un exemple de module selon l'invention respectivement en éclaté et à l'état assemblé,
- la figure 7 illustre le détail A de la figure 6,
- les figures 8 et 9 représentent un exemple de construction des connecteurs électriques de premier type et de deuxième type, au niveau d'une coupe schématique de la zone de jonction entre deux modules adjacents, respectivement dans leurs configurations inactives et dans leurs configurations actives.

### Description de modes préférentiels de l'invention

Sur les figures 2 à 9, un module photovoltaïque 10a comprend au moins un connecteur électrique d'un premier type 12. Le module 10a comprend aussi au moins un connecteur électrique d'un deuxième type 13.

Une installation photovoltaïque comprend au moins deux modules photovoltaïques distincts et assemblés l'un avec l'autre de sorte à être disposés de manière adjacente au niveau de l'un de leurs bords. Ainsi, la figure 2 représente sans être limitative une installation photovoltaïque comprenant le module photovoltaïque 10a évoqué ci-dessus, un premier module photovoltaïque adjacent repéré 10b disposé de manière adjacente au module 10a au niveau d'un bord latéral gauche du module 10a et un deuxième module photovoltaïque adjacent 10c disposé de manière adjacente au module 10a au niveau d'un bord latéral droit du module 10a. Les trois modules photovoltaïques 10a, 10b et 10c comprennent chacun au moins un connecteur électrique de premier type 12 et au moins un connecteur électrique de deuxième type 13, tous identiques d'un module à l'autre et fonctionnant de la manière décrite plus loin pour assurer la connexion électrique entre les modules photovoltaïques adjacents. Il convient d'ailleurs de préciser que l'installation photovoltaïque peut comprendre un nombre quelconque de modules photovoltaïques, par exemple supérieur à 3.

De manière générale, le connecteur électrique de premier type 12 d'un module photovoltaïque donné est agencé de sorte à pouvoir coopérer avec le connecteur électrique de deuxième type 13 d'un autre module photovoltaïque lorsque ces deux modules sont assemblés entre eux de sorte à être adjacents.

Le premier module photovoltaïque adjacent 10b comprend au moins un connecteur électrique de premier type 12 identique à celui du module 10a ainsi qu'au moins un connecteur électrique de deuxième type 13 identique à celui du module 10a. Le deuxième module photovoltaïque adjacent 10c comprend au moins un connecteur électrique de premier type 12 identique à celui du module 10a et du module 10b ainsi qu'au moins un connecteur électrique de deuxième type 13 identique à celui du module 10a et du module 10b.

Le connecteur électrique de premier type 12 du module photovoltaïque 10a est agencé de sorte à pouvoir coopérer avec le connecteur électrique de deuxième type 13 du premier module photovoltaïque adjacent 10b qui est disposé de manière adjacente au bord gauche du module photovoltaïque 10a. Le connecteur électrique de deuxième type 13 est distinct du connecteur de premier type 12 et ils appartiennent à des modules photovoltaïques distincts et adjacents, mais ces connecteurs de premier et deuxième types 12, 13 sont prévus pour pouvoir coopérer l'un avec l'autre lorsque les deux modules 10a, 10b sont assemblés mécaniquement l'un avec l'autre. Le premier module photovoltaïque adjacent 10b est distinct du module photovoltaïque 10a en ce sens qu'ils sont de préférence chacun d'un seul tenant et manipulables séparément. Le premier module photovoltaïque adjacent 10b est conçu de sorte à coopérer avec le module 10a en ce sens qu'ils peuvent être assemblés l'un à l'autre par deux bords en regard l'un de l'autre et qu'ils peuvent coopérer électriquement via les connecteurs électriques de premier et de deuxième types 12, 13. La coopération entre les connecteurs 12, 13 a pour effet de permettre d'établir une connexion électrique entre le module photovoltaïque 10a et le module photovoltaïque 10b.

Le connecteur électrique de deuxième type 13 du module photovoltaïque 10a est agencé de sorte à pouvoir coopérer avec le connecteur électrique du premier type 12 du deuxième module photovoltaïque adjacent 10c qui est donc adjacent au module photovoltaïque 10a. La coopération entre le connecteur de deuxième type 13 du module 10a et le connecteur de premier type 12 du deuxième module adjacent 10c permet d'établir un lien électrique entre les modules photovoltaïque 10a et 10c.

Dans le présent document, le terme « module photovoltaïque » correspond préférentiellement à un capteur solaire de type panneau photovoltaïque ayant une pluralité de cellules photovoltaïques assemblées mécaniquement et connectées électriquement entre elles pour former un ensemble unitaire, généralement de forme plane.

Il convient de préférence d'interpréter le terme « coopérer » comme signifiant « être en contact physique l'un contre l'autre et en contact électrique direct l'un avec l'autre ».

Le module photovoltaïque 10a comprend un élément rotatif dont la rotation réalise le passage du connecteur électrique de premier type 12 du module 10a d'une configuration active dans laquelle ce connecteur électrique de premier type 12 permet l'établissement d'un lien électrique (via le connecteur électrique de deuxième type 13 du module 10b avec qui il coopère) entre le module photovoltaïque 10a et le module photovoltaïque 10b et une configuration inactive dans laquelle la possibilité d'établissement de ce lien électrique est inhibée.

Le fonctionnement du connecteur électrique de premier type 12 du module photovoltaïque 10c est identique: le deuxième module adjacent 10c comprend un élément rotatif dont la rotation réalise le passage du connecteur électrique de premier type 12 du module 10c d'une configuration active dans laquelle ce connecteur électrique de premier type 12 permet l'établissement d'un lien électrique (via le connecteur électrique de deuxième type 13 du module 10a avec qui il coopère) entre le module photovoltaïque 10c et le module photovoltaïque 10a et une configuration inactive dans laquelle la possibilité d'établissement de ce lien électrique est inhibée.

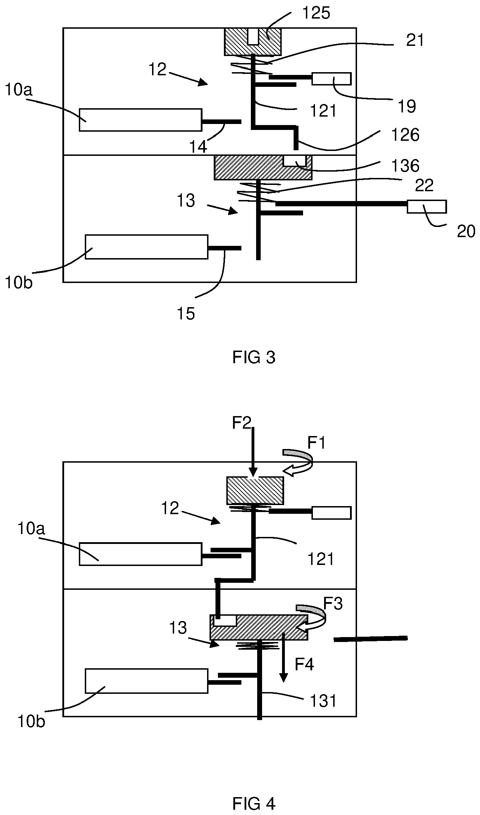

Préférentiellement, et comme illustré sur les figures 3, 4, 8 et 9, cet élément rotatif est constitué par une partie mobile 121 du connecteur électrique du premier type 12 du module 10a montée à pivotement autour d'un axe de pivotement D1 par rapport au module photovoltaïque 10a de sorte que le passage du connecteur électrique de premier type 12 d'une configuration à l'autre se pratique par un mouvement de pivotement F1 de sa partie mobile 121 sur une course angulaire donnée. La configuration active correspond à une première position angulaire de la partie mobile 121 à une extrémité de la course angulaire totale dans laquelle une connexion électrique est établie entre le module photovoltaïque 10a et le connecteur électrique de premier type 12 du module 10a. La configuration inactive correspond à une deuxième position angulaire de la partie mobile 121 à l'extrémité opposée de la course angulaire totale dans laquelle la connexion électrique entre le module photovoltaïque 10a et le connecteur électrique de premier type 12 du module 10a n'est pas établie. A titre d'exemple, la course angulaire totale entre les première et deuxième positions angulaires est de 90 degrés, de sorte que la partie mobile 121 agit à la manière d'un quart de tour.

Le fonctionnement de chaque connecteur électrique de premier type 12 des modules 10b et 10c est identique.

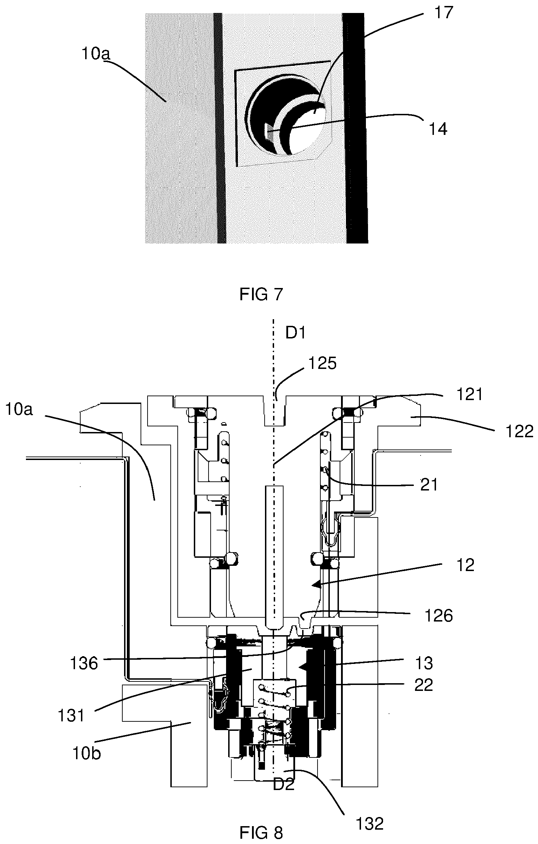

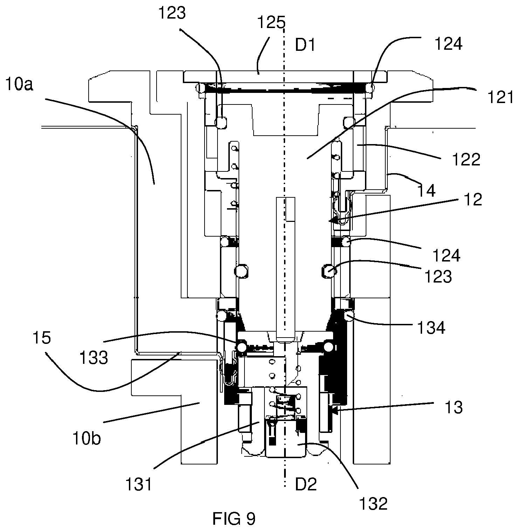

Préférentiellement, par exemple en référence aux figures 7 et 9, le module photovoltaïque 10a comprend un premier élément électriquement conducteur 14 agencé de sorte à établir la connexion électrique entre le module photovoltaïque 10a et la partie mobile 121 du connecteur électrique de premier type 12 du module 10a dans la première position de sa partie mobile 121. Bien que la nature du premier élément électriquement conducteur 14 puisse être quelconque, il se présente notamment sous la forme d'une première lame électriquement conductrice, qu'il convient de recourber d'une manière telle qu'elle soit en contact automatiquement avec la partie mobile 121 lorsque celle-ci occupe sa première position.

De manière identique, le module photovoltaïque 10b comprend également un tel premier élément électriquement conducteur 14 apte à établir la connexion électrique entre le module photovoltaïque 10b et la partie mobile du connecteur électrique de premier type porté par le module 10b. Il en est de même pour le module photovoltaïque 10c.

La figure 3 illustre schématiquement le principe de fonctionnement du connecteur de premier type 12 du module 10a dans la deuxième position angulaire de sa partie mobile 121. Par contre, la figure 4 illustre schématiquement le principe de fonctionnement de ce connecteur de premier type 12 dans la première position angulaire de sa partie mobile 121 qui est alors en liaison électrique avec le module photovoltaïque 10a, via le premier élément électriquement conducteur 14 du module 10a. Les mêmes configurations sont respectivement adoptées sur les figures 8 et 9.

Selon un mode de réalisation, le connecteur électrique du premier type 12 du module photovoltaïque 10a comprend une partie fixe 122 montée au reste du module photovoltaïque 10a de sorte à être immobile en rotation autour de l'axe de pivotement D1 de la partie mobile 121 de ce connecteur électrique du premier type 12. Le principe est alors identique pour les connecteurs électriques de premier type 12 qui appartiennent aux modules 10b, 10c.

De manière générale, la partie fixe 122 d'un connecteur électrique de premier type 12 est destinée à assurer une fonction de fixation du connecteur électrique de premier type 12 sur le module photovoltaïque 10a, 10b, 10c correspondant et une fonction de guidage de la partie mobile 121 de ce connecteur dans son mouvement de pivotement. Toutefois, la partie fixe 122 pourrait être absente en assurant dans ce cas un montage à pivotement de la partie mobile 121 directement sur le module photovoltaïque 10a, 10b, 10c correspondant.

Préférentiellement, chaque module 10a, 10b, 10c comprend un premier moyen d'étanchéité 123 assurant une fonction d'étanchéité à l'air et à l'eau, interposé entre la partie mobile 121 et la partie fixe 122 du connecteur électrique de premier type 12 et un deuxième moyen d'étanchéité 124 assurant une fonction identique et interposé entre la partie fixe 122 du connecteur électrique de premier type 12 et le reste du module photovoltaïque 10a, 10b, 10c correspondant. Chaque moyen d'étanchéité 123, 124 peut être de toute nature à la fonction recherchée et peut notamment être de type joint à lèvre ou joint torique.

Il est avantageux de faire en sorte que l'axe de pivotement D1 de la partie mobile 121 du connecteur électrique du premier type 12 soit perpendiculaire à la direction longitudinale X et à la direction latérale Y qui correspondent respectivement à la longueur et à la largeur du premier module photovoltaïque 10a. Cette disposition permet que la manipulation des connecteurs 12, 13 soit très simple une fois les modules photovoltaïques 10a, 10b, 10c assemblés. Il en est de même pour les connecteurs électriques de premier type 12 des modules photovoltaïques 10b, 10c. Toutefois, l'orientation de l'axe de pivotement D1 peut être quelconque pour chaque connecteur électrique de premier type 12.

Préférentiellement, le connecteur électrique de deuxième type 13 du module photovoltaïque 10a comprend une partie mobile 131 par pivotement montée à pivotement autour d'un axe D2 par rapport au module photovoltaïque 10a sur une course angulaire donnée de sorte que ce connecteur électrique de deuxième type 13 varie, par pivotement de sa partie mobile 131, entre :
- une configuration active adoptée dans une première position angulaire de la partie mobile 131 dans laquelle le connecteur électrique de deuxième type 13 permet l'établissement d'un lien électrique (via le connecteur électrique de premier type 12 du module 10c avec qui il coopère) entre le module photovoltaïque 10a et le deuxième module photovoltaïque adjacent 10c et dans laquelle une connexion électrique est établie entre le module photovoltaïque 10a et le connecteur électrique de deuxième type 13 du module 10a,
- et une configuration inactive adoptée dans une deuxième position angulaire de la partie mobile 131 dans laquelle la possibilité d'établissement du lien électrique entre des deux modules photovoltaïques 10a, 10c est inhibée et dans laquelle la connexion électrique entre le module photovoltaïque 10a et le connecteur électrique de deuxième type 13 du module 10a n'est pas établie.

Toutes les caractéristiques fonctionnelles et structurelles liées au connecteur électrique de deuxième type 13 qui appartient au module photovoltaïque 10a sont identiques pour le connecteur électrique de deuxième type 13 qui appartient au module photovoltaïque 10b et pour celui appartient au module photovoltaïque 10c. Ainsi, le connecteur électrique de deuxième type 13 du premier module photovoltaïque adjacent 10b fonctionne de la même manière que le connecteur électrique de deuxième type 13 du module photovoltaïque 10a. Seul le connecteur électrique de deuxième type 13 du premier module photovoltaïque adjacent 10b est illustré dans le détail sur les figures 3, 4 et 8 et 9, de sorte que toutes les caractéristiques fonctionnelles et structurelles sont représentées en application à celui-ci. Cela permet en outre d'illustrer la coopération du connecteur électrique de deuxième type 13 du module 10b avec le connecteur électrique de premier type 12 du module 10a.

Le connecteur électrique de deuxième type 13 du premier module photovoltaïque adjacent 10b comprend donc également une partie mobile 131 par pivotement montée à pivotement autour d'un axe D2 par rapport au reste du module photovoltaïque 10b sur une course angulaire donnée de sorte que ce connecteur électrique de deuxième type 13 varie, par pivotement de sa partie mobile 131, entre :
- une configuration active (figures 4 et 9) adoptée dans une première position angulaire de la partie mobile 131 dans laquelle le connecteur électrique de deuxième type 13 permet l'établissement d'un lien électrique (via le connecteur électrique de premier type 12 du module 10a avec qui il coopère) entre le module photovoltaïque 10a et le premier module photovoltaïque adjacent 10b et dans laquelle une connexion électrique est établie entre le module photovoltaïque 10b et le connecteur électrique de deuxième type 13 du module 10b,
- et une configuration inactive (figures 3 et 8) adoptée dans une deuxième position angulaire de la partie mobile 131 dans laquelle la possibilité d'établissement du lien électrique entre le module photovoltaïque 10a et le premier module photovoltaïque adjacent 10b est inhibée et dans laquelle la connexion électrique entre le module photovoltaïque 10b et le connecteur électrique de deuxième type 13 du module 10b n'est pas établie.

Il est clair que le connecteur électrique de deuxième type 13 du deuxième module photovoltaïque adjacent 10c présente un fonctionnement similaire via un connecteur électrique de premier type d'un autre module photovoltaïque non représenté et avec qui il coopère. De même, le connecteur électrique de premier type 12 du premier module adjacent 10b présente une fonctionnement similaire à ceux des autres modules, via un connecteur électrique de deuxième type d'un autre module photovoltaïque non représenté et avec qui il coopère.

Le module photovoltaïque 10a comprend un deuxième élément électriquement conducteur 15 (non illustré) agencé de sorte à établir la connexion électrique entre le module photovoltaïque 10a et la partie mobile 131 du connecteur électrique de deuxième type 13 du module 10a dans la première position de sa partie mobile 131. Bien que la nature du deuxième élément électriquement conducteur 15 puisse être quelconque, il se présente notamment sous la forme d'une deuxième lame électriquement conductrice, qu'il convient de recourber d'une manière telle qu'elle soit en contact automatiquement avec la partie mobile 131 lorsque celle-ci occupe sa première position angulaire.

De manière identique, le premier module photovoltaïque adjacent 10b comprend également un tel deuxième élément électriquement conducteur 15 (visible sur les figures) agencé de sorte à établir la connexion électrique entre le module photovoltaïque 10b et la partie mobile 131 du connecteur électrique de deuxième type 13 dans la première position de sa partie mobile 131. Le deuxième module photovoltaïque adjacent 10c comprend également un tel deuxième élément électriquement conducteur 15 utilisé en association avec la partie mobile du connecteur électrique de deuxième type du module 10c.

La figure 3 illustre schématiquement le principe de fonctionnement du connecteur électrique de deuxième type 13 du module 10b dans la deuxième position angulaire de sa partie mobile 131. Par contre, la figure 4 illustre schématiquement le principe de fonctionnement du connecteur de deuxième type 13 du module 10b dans la première position angulaire de sa partie mobile 131 qui est dans ce cas en liaison électrique avec le module photovoltaïque 10b, via le deuxième élément électriquement conducteur 15. Les mêmes configurations sont respectivement adoptées sur les figures 8 et 9.

Selon un mode de réalisation avantageux, le connecteur électrique du deuxième type 13 du module photovoltaïque 10a comprend une partie fixe 132 montée au reste du module photovoltaïque 10a de sorte à être immobile en rotation autour de l'axe de pivotement D2 de la partie mobile 131 de ce connecteur électrique du deuxième type 13. Le principe est alors identique pour les connecteurs électriques de deuxième type 13 qui appartiennent aux modules 10b, 10c.

De manière générale, la partie fixe 132 de chaque connecteur électrique de deuxième type 13 est destinée à assurer une fonction de fixation du connecteur électrique de deuxième type 13 sur le module photovoltaïque 10a, 10b, 10c correspondant et une fonction de guidage de sa partie mobile 131 dans son mouvement de pivotement. Toutefois, la partie fixe 132 pourrait être absente en assurant dans ce cas un montage à pivotement de la partie mobile 131 directement sur le module photovoltaïque 10a, 10b, 10c correspondant.

Préférentiellement, chaque module 10a, 10b, 10c comprend un troisième moyen d'étanchéité 133 assurant une fonction d'étanchéité à l'air et à l'eau interposé entre la partie mobile 131 et la partie fixe 132 du connecteur électrique de deuxième type 13 et un quatrième moyen d'étanchéité 134 assurant une fonction identique et interposé entre la partie fixe 133 du connecteur électrique de deuxième type 13 et le reste du module photovoltaïque 10a, 10b, 10c correspondant. Chaque moyen d'étanchéité 133, 134 peut être de toute nature à la fonction recherchée et peut notamment être de type joint à lèvre ou joint torique.

L'utilisation de joints à lèvre pour la constitution des moyens d'étanchéité 123, 124, 133, 134 permet de diminuer les efforts nécessaires aux déplacements des parties mobiles 121, 131 et permet d'absorber plus facilement des défauts de formes des différentes pièces.

Comme précédemment et pour les mêmes raisons, il est avantageux de prévoir que l'axe de pivotement D2 de la partie mobile 131 du connecteur électrique du deuxième type 13 du module 10a soit perpendiculaire aux directions X, Y correspondant à la longueur et à la largeur du module photovoltaïque 10a. Il en est de même pour les connecteurs électriques de deuxième type 13 des modules photovoltaïques 10b, 10c. Toutefois, l'orientation de l'axe de pivotement D2 peut être quelconque pour chaque connecteur électrique de deuxième type 13.

Préférentiellement, le connecteur électrique du premier type 12 et/ou le connecteur électrique du deuxième type 13 du module 10a est agencé au niveau d'un cadre 16 ceinturant le module photovoltaïque 10a. Il en est de même pour le connecteur de premier type 12 et/ou le connecteur de deuxième type 13 du module 10b au niveau d'un autre cadre 16 ceinturant le premier module photovoltaïque adjacent 10b. De manière similaire, le connecteur électrique du premier type 12 et/ou le connecteur électrique du deuxième type 13 du module 10c est agencé au niveau d'un troisième cadre 16 ceinturant le deuxième module photovoltaïque adjacent 10c. Autrement dit, chaque module photovoltaïque 10a, 10b, 10c comprend un cadre 16 qui le ceinture. Il en résulte une diminution du nombre d'étapes d'assemblage par rapport à la solution de l'art antérieur précédemment exposée grâce à une intégration avantageuse du montage des connecteurs de premier et de deuxième types 12, 13 dans le processus de réalisation des cadres 16.

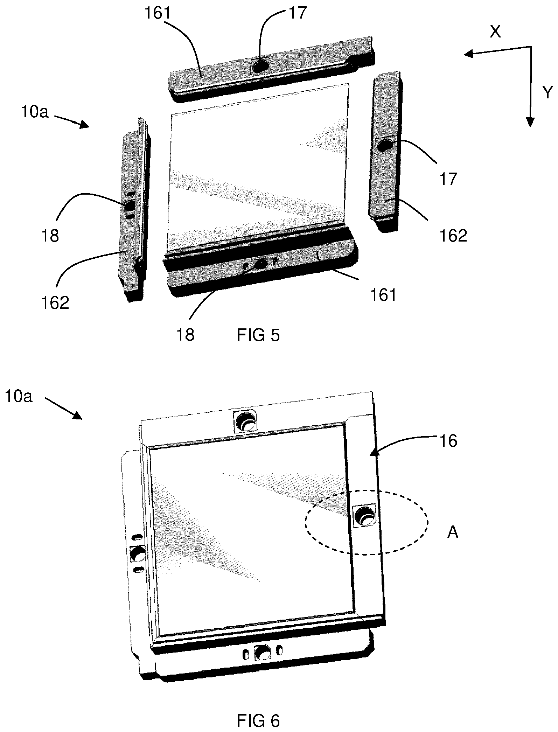

Préférentiellement et en référence aux figures 5 à 7, chaque cadre 16 peut comprendre à cet effet un premier logement 17 dans lequel est logé chaque connecteur électrique du premier type 12 et/ou un deuxième logement 18 dans lequel est logé chaque connecteur électrique du deuxième type 13. Chaque premier logement 17 et chaque deuxième logement 18 présente notamment une forme circulaire afin de simplifier la fabrication, bien que toute autre forme puisse être envisagée en fonction des besoins.

De la manière illustrée, chaque cadre 16 est formé par deux éléments longitudinaux 161 orientés selon la direction longitudinale X du module photovoltaïque qu'il ceinture et par deux éléments latéraux 162 orientés selon la direction latérale Y du module photovoltaïque qu'il ceinture, assemblés deux à deux de sorte à former un cadre de forme rectangulaire. Un premier logement 17 est formé dans un tel élément latéral 162 et un autre premier logement 17est formé dans un tel élément longitudinal 161, directement assemblés l'un à l'autre. Un deuxième logement 18 est formé dans l'autre tel élément latéral 162 et un autre deuxième logement 18 est formé dans l'autre tel élément longitudinal 161, directement assemblés l'un à l'autre.

Il ressort de ce qui précède que l'installation photovoltaïque comprend le module photovoltaïque 10a et le premier module photovoltaïque adjacent 10b tels que décrits ci-avant, disposés de manière adjacente l'un contre l'autre au niveau de leurs cadres 16. Le module 10a comprend au moins un connecteur électrique de premier type 12 tandis que le module 10b comprend au moins un connecteur électrique de deuxième type 13. Cette installation varie entre :
- une première configuration électrique (figures 4 et 9) dans laquelle le lien électrique est établi entre les modules photovoltaïques 10a, 10b adoptée dans la configuration active du connecteur électrique de premier type 12 et lorsque le connecteur électrique du premier type 12 et le connecteur électrique du deuxième type 13 sont en contact physique et électrique,
- et une deuxième configuration électrique (figures 3 et 8) dans laquelle le lien électrique n'est pas établi entre les modules photovoltaïques 10a, 10b adoptée dans la configuration inactive du connecteur électrique de premier type 12 et/ou lorsque le connecteur électrique du premier type 12 et le connecteur électrique du deuxième type 13 ne sont pas en contact physique et électrique.

Dans la première configuration électrique de l'installation photovoltaïque et en référence aux figures 4 et 9, la partie mobile 121 du connecteur électrique de premier type 12 du module 10a occupe préférentiellement sa première position angulaire où une connexion électrique est établie entre le module photovoltaïque 10a et le connecteur électrique de premier type 12 du module 10a et la partie mobile 131 du connecteur électrique de deuxième type 13 du premier module adjacent 10b occupe de préférence sa première position angulaire où une connexion électrique est établie entre le module photovoltaïque 10b et le connecteur électrique de deuxième type 13 du module 10b. Les parties mobiles 121, 131 des connecteurs électriques de premier et deuxième types 12, 13 sont en contact physique et électrique entre elles. Le connecteur électrique de premier type 12 est notamment connecté électriquement à une borne positive du module photovoltaïque 10a. Le connecteur électrique de deuxième type 13 est quant à lui notamment connecté électriquement à une borne négative du module photovoltaïque 10b.

Dans la deuxième configuration électrique de l'installation photovoltaïque et en référence aux figures 3 et 8, la partie mobile 121 du connecteur électrique de premier type 12 du module 10a occupe préférentiellement sa deuxième position angulaire où la connexion électrique n'est pas établie entre le module photovoltaïque 10a et le connecteur électrique de premier type 12 du module 10a et/ou la partie mobile 131 du connecteur électrique de deuxième type 13 du premier module adjacent 10b occupe sa deuxième position angulaire où la connexion électrique n'est pas établie entre le module photovoltaïque 10b et le connecteur électrique de deuxième type 13. Alternativement ou en combinaison, dans la deuxième configuration électrique de l'installation photovoltaïque et en référence aux figures 3 et 8, les parties mobiles 121, 131 des connecteurs électrique de premier et deuxième types 12, 13 ne sont pas en contact physique et électrique.

Préférentiellement, le module photovoltaïque 10a et le premier module photovoltaïque adjacent 10b comprennent respectivement des premier et deuxième éléments d'assemblage indépendants des connecteurs électriques de premier et de deuxième types 12, 13 et coopérant l'un avec l'autre de sorte à solidariser ou désolidariser mécaniquement les modules photovoltaïques 10a, 10b entre eux selon un positionnement relatif tel que l'axe de pivotement D1 de la partie mobile 121 du connecteur électrique de premier type 12 du module 10a soit aligné avec l'axe de pivotement D2 de la partie mobile 131 du connecteur électrique du deuxième type 13 du module 10b.

Dans un mode de réalisation particulier, les connecteurs électriques de premier et de deuxième types 12, 13 sont agencés de sorte que la mise en œuvre d'une désolidarisation mécanique entre les modules photovoltaïques 10a, 10b par les premier et deuxième éléments d'assemblage provoque automatiquement le passage de l'installation photovoltaïque vers la deuxième configuration électrique, notamment par la suppression de tout contact physique et électrique entre les parties mobiles 121, 131 des connecteurs électriques de premier et deuxième types 12, 13 respectivement solidaires des modules 10a, 10b. Il en résulte donc dans ce mode de réalisation une suppression automatique du contact physique et électrique entre les connecteurs électriques de premier et de deuxième types 12, 13 dès que les éléments d'assemblage sont commandés vers leur état assurant la désolidarisation mécanique des deux modules 10a, 10b adjacents.

Alternativement ou en combinaison, les premier et deuxième éléments d'assemblage peuvent solidariser mécaniquement les modules photovoltaïques 10a, 10b entre eux indépendamment du choix parmi les première et deuxième configurations électriques de l'installation photovoltaïque. Ainsi, les éléments d'assemblage peuvent dans cette variante être actionnés vers leur état assurant la solidarisation mécanique entre les deux modules 10a, 10b adjacents sans que les connecteurs électriques de premier et deuxième types 12, 13 ne soient mis en contact physique et électrique et/ou sans que les parties mobiles 121, 131 des connecteurs électriques de premier type et de deuxième types 12, 13 ne soient pivotées vers leurs premières positions de connexion électrique (via respectivement les éléments électriquement conducteurs 14, 15) avec leurs modules photovoltaïques 10a, 10b respectifs.

De tels éléments d'assemblage permettent de séparer la fonction d'assemblage et des deux modules photovoltaïques adjacents et la fonction de connexion électrique entre les modules photovoltaïques. Ils peuvent notamment être aménagés au niveau des cadres 16 des deux modules 10a, 10b et peuvent être de toute nature adaptée à la fonction recherchée et peuvent par exemple comprendre des positionneurs mécaniques tels que des vis à bille ou des systèmes à cône conférant une tolérance de positionnement relatif des deux modules 10a, 10b dans les trois dimensions.

Dans une première variante, la mise en contact physique et électrique des connecteurs électriques de premier et de deuxième types 12, 13 résulte automatiquement de la simple mise en œuvre des premier et deuxième éléments d'assemblage vers leur état assurant la solidarisation mécanique des modules photovoltaïques 10a, 10b entre eux : la simple action de solidarisation mécanique des deux modules 10a, 10b adjacents via les premier et deuxième éléments d'assemblage suffit à établir le contact physique et électrique des connecteurs électriques de premier et de deuxième types 12, 13, et ce quelles que soient les positions angulaires adoptées par leurs parties mobiles 121, 131 autour de leurs axes de pivotement D1, D2 respectifs.

Dans une deuxième variante, cette mise en contact physique et électrique des connecteurs électriques de premier et de deuxième types 12, 13 est conditionnée en sus par la mise en œuvre du mouvement de coulissement F2 de la partie mobile 121 du connecteur électrique de premier type 12 par rapport à la partie mobile 131 du connecteur électrique de deuxième type 13 (qui reste alors fixe par coulissement le long de son axe de pivotement D2), ce mouvement de coulissement F1 s'interrompant automatiquement en raison et au moment de l'entrée en contact physique de la partie mobile 121 du connecteur électrique de premier type 12 avec la partie mobile 131 du connecteur électrique de deuxième type 13.

Préférentiellement et en référence à la figure 4, le connecteur électrique de premier type 12 comprend un organe d'actionnement 125 accessible depuis l'extérieur du module photovoltaïque 10a et agencé de sorte à permettre l'application à cet organe d'actionnement 125 d'un effort d'entraînement (par exemple par l'intermédiaire d'un tournevis) provoquant un mouvement de pivotement F1 de la partie mobile 121 du connecteur électrique de premier type 12 de sa deuxième position à sa première position. Il peut être avantageux de prévoir que les connecteurs électriques de premier et de deuxième types 12, 13 comprennent des éléments de coopération 126, 136, notamment de formes complémentaires de type mâle-femelle, assurant que ce mouvement de pivotement F1 de la partie mobile 121 du connecteur électrique de premier type 12 du module 10a provoque un mouvement de pivotement F3 de la partie mobile 131 du connecteur électrique de deuxième type 13 du module 10b de sa deuxième position à sa première position, la partie mobile 131 du connecteur électrique de deuxième type 13 étant entraînée par la partie mobile 121 du connecteur électrique de premier type 12 au niveau des éléments de coopération 126, 136. Ainsi, la seule manipulation de l'organe d'actionnement 125 permet la variation de l'installation photovoltaïque d'une configuration électrique à l'autre sans qu'il ne soit besoin de prévoir une action spécifique sur le connecteur électrique de deuxième type 13 du module 10b.

De manière avantageuse, la partie mobile 121 du connecteur électrique de premier type 12 peut être montée à coulissement le long de son axe de pivotement D1 de sorte à pouvoir se translater sur une course de coulissement en opposition à l'action d'un premier élément de rappel 21 (visible sur les figures 3 et 8) du module 10a sollicitant la partie mobile 121 vers une position de repos. La position de repos correspond par exemple à une position supérieure dans laquelle le premier élément de rappel 21, qui est par exemple un ressort, est pas ou peu sollicité en compression. Cette variante présente l'avantage de permettre que le connecteur électrique de premier type 12 soit agencé de sorte que l'entraînement à pivotement F1 de la partie mobile 121 du connecteur électrique de premier type 12 par l'organe d'actionnement 125 est conditionné à la mise en œuvre d'un mouvement de coulissement F2 de la partie mobile 121 du connecteur électrique de premier type 12 depuis sa position de repos. Cela renforce la sécurité générale de l'ensemble en faisant en sorte que le passage de l'installation vers la première configuration électrique est conditionné à la mise en œuvre volontaire du mouvement de coulissement F2.

Préférentiellement et en référence à la figure 4, la partie mobile 131 du connecteur électrique de deuxième type 13 peut être montée à coulissement le long de son axe de pivotement D2 de sorte à pouvoir se translater sur une course de coulissement en opposition à l'action d'un deuxième élément de rappel 22 du module 10b sollicitant la partie mobile 131 vers une position de repos. La position de repos correspond par exemple à une position supérieure dans laquelle le deuxième élément de rappel 22, qui est par exemple un ressort, est pas ou peu sollicité en compression. Cette variante présente l'avantage que les connecteurs électriques de premier et de deuxième types 12, 13 peuvent assurer que le mouvement de coulissement F2 de la partie mobile 121 du connecteur électrique de premier type 12 depuis sa position de repos provoque un mouvement de coulissement F4 de la partie mobile 131 du connecteur électrique de deuxième type 13 depuis sa position de repos. L'entraînement à pivotement de la partie mobile 131 du connecteur électrique de deuxième type 13 par la partie mobile 121 du connecteur électrique de premier type 12 est conditionné à la mise en œuvre du mouvement de coulissement F4 de la partie mobile 131 du connecteur électrique de deuxième type 13 depuis sa position de repos. Tant que le connecteur électrique 13 est dans sa position de repos sous l'action de rappel de l'élément 22, le mouvement de pivotement F3 de la partie mobile 121 est interdit pour le passage de la deuxième position à la première position, ou réciproquement, interdisant le passage de l'installation vers la première configuration électrique.

En pratique, l'installateur positionne visuellement les modules 10a, 10b à l'aide des éléments d'assemblage qui autorisent un jeu de quelques millimètres afin de faciliter la mise en place et de laisser un minimum de liberté entre les modules 10a, 10b (dilatation, tolérances dimensionnelles,...). La solution précédente confère une intégration aisée de la connectique électrique dans les cadres 16 qui ceinturent les modules photovoltaïques 10a, 10b. Avec un outil de type tournevis, l'installateur tourne l'organe d'actionnement 125 pour passer (mouvements F1, F3) les parties mobiles 121, 131 de leurs deuxièmes positions angulaires vers leurs premières positions angulaires, tout en exerçant une pression (mouvement F2) sur le connecteur de premier type 12. Celui-ci s'enclenche dans le connecteur de deuxième type 13 via les éléments de coopération 126, 136 et l'entraine en rotation (F3) et vers le bas (F4). En position basse à l'opposé de leurs positions de repos, les parties mobiles 121, 131 des connecteurs de premier et de deuxième types 12, 13 en contact électrique et mécanique entre elles établissent un contact électrique entre la borne positive du module photovoltaïque 10a et la borne négative d'un autre module photovoltaïque 10b.

Plus précisément, le contact électrique n'est pas établi entre l'élément électriquement conducteur 14 et la partie mobile 121 lorsque la partie mobile 121 est dans sa deuxième position angulaire. Ce contact électrique est rendu possible par une manœuvre F1, F2 de l'organe 125 et de la partie mobile 121. Une pression verticale sur la partie mobile 121 permet son coulissement F2 vers le bas sur une course de quelques millimètres ce qui rend alors possible son mouvement de pivotement F1 qui à son tour permet le passage vers la première position angulaire de la partie mobile 121, ce qui établit la connexion électrique entre l'élément électriquement conducteur 14 et la partie mobile 121. Lorsque le connecteur électrique de premier type 12 est manœuvré, il vient en contact sur le connecteur électrique de deuxième type 13 et entraîne également à pivotement sa partie mobile 131 lors de sa propre rotation. Cela permet le passage de la partie mobile 131 de la deuxième position angulaire à la première position angulaire. Cela établit le contact électrique entre l'élément électriquement conducteur 15 et la partie mobile 131. La connexion électrique est alors établie entre les deux modules photovoltaïques 10a, 10b adjacents.

Dans tout ce qui précède, un module photovoltaïque donné est formé comme l'ensemble formé d'une part du laminé comprenant les cellules photovoltaïques, l'encapsulant et les plaques de verres, d'autre part le cadre et le(s) connecteur(s) électrique(s).

Outre ceux déjà mentionnés, la solution précédemment décrite présente les avantages suivants :
- simplicité et sécurité pour l'installateur qui met sous tension électrique avec une clé (ou un tournevis),
- possibilité de relier mécaniquement les modules photovoltaïques sans les connecter électriquement,
- possibilité de déconnecter électriquement les modules photovoltaïques entre eux avant de les désolidariser mécaniquement,
- la connectique est implémentée en usine, il en résulte une fiabilisation évidente en s'affranchissant de dispersions humaines,
- amélioration de la sécurité grâce à une suppression de tout risque d'accéder aux éléments sous tension électrique des modules photovoltaïques,
- étanchéité assurée par un assemblage défini de joints du commerce ayant une qualité éprouvée,
- amélioration de la sécurité.

## Revendications

1. Ensemble ou système photovoltaïque, comprenant :
- un connecteur électrique d'un premier type (12), et
- un connecteur électrique d'un deuxième type (13),
le connecteur électrique de premier type (12) étant agencé de sorte à pouvoir coopérer avec le connecteur électrique de deuxième type (13) pour établir une connexion électrique, le connecteur électrique de premier type (12) comprenant un élément rotatif (121) dont la rotation réalise le passage du connecteur électrique du premier type (12) d'une configuration active dans laquelle le connecteur électrique de premier type (12) permet l'établissement d'un lien électrique et une configuration inactive dans laquelle la possibilité d'établissement du lien électrique est inhibée, **caractérisé en ce que** l'élément rotatif (121) est constitué par une partie mobile (121) du connecteur électrique du premier type (12) montée à pivotement de sorte que le passage du connecteur électrique de premier type (12) d'une configuration à l'autre se pratique par un mouvement de pivotement (F1) de sa partie mobile (121) sur une course angulaire donnée, la configuration active correspondant à une première position angulaire de la partie mobile (121) dans laquelle une connexion électrique est établie et la configuration inactive correspondant à une deuxième position angulaire de la partie mobile (121) dans laquelle ladite connexion électrique n'est pas établie.

2. Ensemble ou système selon la revendication 1, **caractérisé en ce qu'**il comprend un premier élément électriquement conducteur (14), agencé de sorte à établir une connexion électrique avec la partie mobile (121) du connecteur électrique de premier type (12) dans la première position de la partie mobile du connecteur électrique de premier type (12).

3. Module photovoltaïque (10a) comprenant un ensemble ou système selon la revendication 1 ou 2.

4. Module photovoltaïque (10a) comprenant un connecteur électrique d'un premier type (12) agencé de sorte à pouvoir coopérer avec un connecteur électrique d'un deuxième type (13), le connecteur électrique de premier type (12) comprenant un élément rotatif (121) dont la rotation réalise le passage du connecteur électrique du premier type (12) d'une configuration active dans laquelle le connecteur électrique de premier type (12) permet l'établissement d'un lien électrique entre le module photovoltaïque (10a, 10b) et le connecteur électrique d'un deuxième type (13) et une configuration inactive dans laquelle la possibilité d'établissement du lien électrique est inhibée, **caractérisé en ce que** l'élément rotatif (121) est constitué par une partie mobile (121) du connecteur électrique du premier type (12) montée à pivotement de sorte que le passage du connecteur électrique de premier type (12) d'une configuration à l'autre se pratique par un mouvement de pivotement (F1) de sa partie mobile (121) sur une course angulaire donnée, la configuration active correspondant à une première position angulaire de la partie mobile (121) dans laquelle une connexion électrique est établie entre le module photovoltaïque (10a) et le connecteur électrique de premier type (12) et la configuration inactive correspondant à une deuxième position angulaire de la partie mobile (121) dans laquelle ladite connexion électrique n'est pas établie.

5. Module (10a) selon la revendication 4, **caractérisé en ce qu'**il comprend un premier élément électriquement conducteur (14), agencé de sorte à établir la connexion électrique entre le module photovoltaïque (10a) et la partie mobile (121) du connecteur électrique de premier type (12) dans la première position de la partie mobile du connecteur électrique de premier type (12).

6. Module (10a) selon l'une des revendications 4 ou 5, **caractérisé en ce que** le connecteur électrique du premier type (12) comprend une partie fixe (122) montée au reste du module photovoltaïque (10a) de sorte à être immobile en rotation autour de l'axe de pivotement (D1) de la partie mobile (121) du connecteur électrique du premier type (12), **en ce que** le module (10a) comprend un premier moyen d'étanchéité (123) à l'air et à l'eau interposé entre la partie mobile (121) et la partie fixe (122) du connecteur électrique de premier type (12) et un deuxième moyen d'étanchéité (124) à l'air et à l'eau interposé entre la partie fixe (122) du connecteur électrique de premier type (12) et le reste du module photovoltaïque (10a).

7. Module (10a) selon l'une des revendications 4 à 6, **caractérisé en ce que** l'axe de pivotement (D1) de la partie mobile (121) du connecteur électrique du premier type (12) est perpendiculaire aux directions (X, Y) correspondant à la longueur et à la largeur du module photovoltaïque (10a).

8. Module (10a) selon l'une des revendications 4 à 7, **caractérisé en ce qu'**il comprend un connecteur électrique du deuxième type (13) agencé de sorte à pouvoir coopérer avec un autre connecteur électrique du premier type (12).

9. Module (10a) selon la revendication 8, **caractérisé en ce que** le connecteur électrique de deuxième type (13) comprend une partie mobile (131) par pivotement montée à pivotement par rapport au module photovoltaïque (10a) sur une course angulaire donnée de sorte que le connecteur électrique de deuxième type (13) varie, par pivotement de ladite partie mobile (131), entre :
- une configuration active adoptée dans une première position angulaire de ladite partie mobile (131) dans laquelle le connecteur électrique de deuxième type (13) permet l'établissement d'un lien électrique entre les modules photovoltaïques (10a, 10c) et dans laquelle une connexion électrique est établie entre le module photovoltaïque (10a) et le connecteur électrique de deuxième type (13),
- et une configuration inactive adoptée dans une deuxième position angulaire de la partie mobile (131) dans laquelle la possibilité d'établissement du lien électrique entre les modules photovoltaïques (10a, 10c) est inhibée et dans laquelle la connexion électrique entre le module photovoltaïque (10a) et le connecteur électrique de deuxième type (13) n'est pas établie.

10. Module (10a) selon l'une des revendications 8 ou 9, **caractérisé en ce qu'**il comprend un deuxième élément électriquement conducteur (15), notamment sous la forme d'une deuxième lame électriquement conductrice, agencé de sorte à établir la connexion électrique entre le module photovoltaïque (10a) et la partie mobile (131) du connecteur électrique de deuxième type (13) dans la première position de la partie mobile (131) du connecteur électrique de deuxième type (13).

11. Module (10a) selon l'une des revendications 8 à 10, **caractérisé en ce que** le connecteur électrique du deuxième type (13) comprend une partie fixe (132) montée au reste du module photovoltaïque (10a) de sorte à être immobile en rotation autour de l'axe de pivotement (D2) de la partie mobile (131) du connecteur électrique du deuxième type (13), **en ce que** le module (10a) comprend un troisième moyen d'étanchéité (133) à l'air et à l'eau interposé entre la partie mobile (131) et la partie fixe (132) du connecteur électrique de deuxième type (13) et un quatrième moyen d'étanchéité (134) à l'air et à l'eau interposé entre la partie fixe (132) du connecteur électrique de deuxième type (13) et le reste du module photovoltaïque (10a).

12. Module (10a) selon l'une des revendications 8 à 11, **caractérisé en ce que** l'axe de pivotement (D2) de la partie mobile (131) du connecteur électrique du deuxième type (13) est perpendiculaire aux directions (X, Y) correspondant à la longueur et à la largeur du module photovoltaïque (10a).

13. Module (10a) selon l'une des revendications 4 à 12, **caractérisé en ce que** le connecteur électrique du premier type (12) et/ou le connecteur électrique du deuxième type (13) est agencé au niveau d'un cadre (16) ceinturant le module photovoltaïque (10a).

14. Module (10a) selon la revendication 13, **caractérisé en ce que** le cadre comprend un logement (17, 18), notamment de forme circulaire, dans lequel est logé le connecteur électrique du premier type (12) et/ou le connecteur électrique du deuxième type (13).
